# EUROPEAN PATENT SPECIFICATION

(11) **EP 4 199 420 B1**
(45) Date of publication and mention of the grant of the patent: **11.03.2026**
(21) Application number: 21215241.7
(22) Date of filing: 16.12.2021
(51) Int. Cl.: H04L 9/40

(54) **METHOD OF GENERATING NETWORK DATA TRAFFIC, MACHINE-LEARNING MODULE, AND SYSTEM FOR GENERATING NETWORK DATA TRAFFIC**
VERFAHREN ZUR ERZEUGUNG VON NETZWERKDATENVERKEHR, MASCHINENLERNMODUL UND SYSTEM ZUR ERZEUGUNG VON NETZWERKDATENVERKEHR
PROCÉDÉ DE GÉNÉRATION DE TRAFIC DE DONNÉES DE RÉSEAU, MODULE D'APPRENTISSAGE AUTOMATIQUE ET SYSTÈME DE GÉNÉRATION D'UN TRAFIC DE DONNÉES DE RÉSEAU

(43) Date of publication of application: 21.06.2023
(73) Proprietor: Rohde & Schwarz GmbH & Co. KG, 81671 München (DE)
(72) Inventor: Mieth, Martin, 81671 München (DE)
(74) Representative: Novagraaf Group

(56) References cited:
- CN-B- 106 484 953
- US-A1- 2012 047 200
- US-A1- 2021 160 268
- GUTTMAN ROTEM D ET AL: "Automated failure detection and attribution in virtual environments", 2015 IEEE INTERNATIONAL SYMPOSIUM ON TECHNOLOGIES FOR HOMELAND SECURITY (HST), IEEE, 14 April 2015 (2015-04-14), pages 1 - 5, XP033209155, DOI: 10.1109/THS.2015.7225309

## Description

The present invention generally relates to a method of generating network data traffic. The present invention further relates to a training method for training a machine-learning module, a machine-learning module, and a system for generating network data traffic.

Due to enhanced encryption and obfuscation, it is becoming more and more challenging to create appropriate visibility and insights into network traffic.

In order to overcome this challenge, machine-learning based network traffic classification can be used. However, a large amount of high quality training data is needed in order to appropriately train the corresponding machine-learning modules.

In fact, the best quality of the training data can be obtained if a human expert manually generates the training data. However, this approach is prone to human errors, time consuming, and limited to human capabilities and time capacities, thereby increasing the overall costs significantly.

It is also possible to artificially generate the training data. However, the quality of the training data obtained via known techniques may be insufficient.

US 2012/047200 A1 discloses a method of generating network data traffic.

US 2021/160268 A12 discloses a device being configured to receive network traffic data regarding a plurality of observed traffic flows, and to map the observed traffic flows to traffic characteristics associated with a targeted deployment environment. The device is further configured to generate synthetic traffic data and to train a machine-learning based traffic classifier based on the synthetic traffic data.

CN 106 484 953 B discloses a mobile terminal simulation system that is configured to simulate a real scene of a user using a mobile terminal based on previously recorded and processed user behavior data.

Thus, the object of the present invention is to provide an efficient method for generating network data traffic that is suitable for training a machine-learning module.

According to the invention, the problem is solved by a method of generating network data traffic according to claim 1.

Therein and in the following, the term "application" is understood to denote a computer program that is running on an electronic device or more precisely executed on a processing unit of the respective electronic device.

Moreover, the term "use case" is understood to denote a certain functionality of the respective application. As most applications have several different functionalities, the respective application may have several use cases.

The method according to the present invention is based on the idea to simulate human behavior of controlling or rather operating an electronic device, such that the generated network data traffic is as similar as possible to network data traffic that is generated by an actual human operating the at least one electronic device.

In general, the application use case module selects at least one application and at least one use case of the at least one application for generating the network data traffic.

The human behavior module simulates human behavior of operating the electronic device, e.g. with respect to the frequency of inputs and/or the type of inputs.

In fact, the human behavior module imitates human behavior with respect to varying time between inputs, order of actions, and/or selection of actions. In other words, the human behavior module varies the frequency of inputs, the type of inputs, and/or the order of different types of inputs in order to simulate human behavior.

The application execution manager generates the control data based on the selected application, the selected use case, and the human behavior data.

In other words, the application execution manager controls the at least one electronic device to execute the at least one selected use case of the at least one selected application based on the inputs simulated by the human behavior module.

Accordingly, the network data traffic generated by means of the method according to the present invention is particularly suitable for training machine-learning modules, for re-training machine-learning modules and/or for testing already trained machine-learning modules, as the generated network data traffic is highly similar to network data traffic generated by humans and therefore of high quality. In other words, realistic network data traffic is provided.

Particularly, the machine-learning module may be trained or re-trained to classify the network data traffic. Alternatively or additionally, the ability of an already trained machine-learning module to classify the network data traffic may be tested.

In fact, the human behavior module may comprise a machine-learning module that is trained to simulate or rather imitate human behavior.

The generated network data traffic is captured by means of a network capture module. Thus, the network data traffic generated by means of the at least one electronic device may be saved into a memory of the network capture module. The saved network data traffic can then be used for training a machine-learning module, re-training a machine-learning module and/or testing an already trained machine-learning module.

The captured data is post-processed by means of a post-processing module, thereby obtaining machine-learning features associated with the captured network data traffic. The obtained machine-learning features can be used during the training, re-training and/or testing of the machine-learning module.

According to another aspect of the present invention, the application use case module selects from a plurality of different applications in order to generate the application use case data, particularly from a plurality of use cases associated with the respective applications. Thus, one or several different use cases of one or several different applications may be executed simultaneously and/or consecutively on the at least one electronic device in order to generate the network data traffic. Accordingly, highly versatile network data traffic is provided that is suitable for training a machine-learning module for a large variety of different scenarios.

The applications may relate to one or several operating systems, e.g. Windows, macOS, Linux, Android, iOS or any other operating system. Moreover, the application use case module may select from one or several different versions of these operating systems. For example, the latest version of the respective operating system may be selected, such that up-to-date network data traffic is provided.

Moreover, the applications may relate to any software that is installed on the at least one electronic device, for example different browsers, messenger apps, virtual private network (VPN) clients, particularly VPN clients associated with different regions, file-sharing apps, e-mail apps, etc.

Particularly, the network data traffic may be generated via applications that employ any type of encryption of the generated data. Accordingly, encrypted network data traffic is provided. Thus, the machine-learning module can be trained, re-trained, and/or tested with encrypted network data traffic.

As a further example, the network data traffic may be generated via a virtual private network. Thus, the machine-learning module can be trained, re-trained, and/or tested with network data traffic generated via a virtual private network.

In an embodiment of the present invention, the at least one use case is predefined and/or obtained by means of a machine-learning technique.

Therein, a "predefined" use case is understood to denote a use case set by a human operator, i.e. by a human expert. This way, the quality of the network data traffic is enhanced further, as the human expert can manually select the most relevant use cases or specific use cases that the machine-learning module still needs to be trained for or that still need to be tested.

Alternatively or additionally, the use cases can be obtained automatically by means of the machine-learning technique, e.g. via reinforcement learning. This way, a large variety of different use cases may be provided without restrictions due to human time capacities.

In a further embodiment of the present disclosure, the at least one electronic device generating the network data traffic is selected from a plurality of different electronic devices by means of a device manager module. For example, the device manager module may select from one or several personal computers, MACs, laptops, smartphones, tablets, smart TVs, smart fridges, consoles, servers, radios, etc.

In other words, the at least one use case of the at least one application may be executed on one or several different electronic devices simultaneously and/or consecutively. Accordingly, highly versatile network data traffic is provided that is suitable for (re-)training a machine-learning module for a large variety of different scenarios and/or for testing a machine-learning module in a large variety of different scenarios.

A further aspect of the present invention provides that a network connection between the at least one electronic device and a data network is configured by means of a network manager module. In other words, the network manager module may select from several available connection types between the electronic device and the data network. Thus, further variety in the generated network data traffic is provided.

Particularly, the network connection may be established via LAN, WLAN, WAN, WWAN, and/or a mobile network. The network connection may be established via different connection types simultaneously and/or consecutively. Thus, further variety in the generated network data traffic is provided.

Moreover, the network connection may be established based on one or more of several different mobile network standards, e.g. 3G, 4G, 5G, and/or CMW/CMX. Particularly, a mobile network may be simulated via CMW.

In general, the type of the network connection may have an influence on the size of the individual data packages of the generated network data traffic. For example, WLAN usually allows for packages of larger size than mobile networks, depending on the router configuration.

According to a further aspect of the present invention, the captured data is post-processed by means of the post-processing module, thereby obtaining metadata associated with the captured network data traffic. The obtained metadata can be used during the training, re-training and/or testing of the machine-learning module.

For example, a deep packet inspection may be performed on the network data traffic in order to obtain the metadata and/or the machine-learning features.

As another example, the captured network data traffic may be labeled based on the obtained metadata and/or machine-learning features, such that labeled training data is provided.

In an embodiment of the present invention, the individual modules are controlled by a central control module. In other words, at least the application use case module, the human behavior module, the application execution module, the network manager module, and/or the device manager module may be controlled by the central control module. In general, the central control module ensures that adequate combinations of human behavior data and selected use cases of selected applications are used in combination with a compatible electronic device or with compatible electronic devices.

Particularly, the network data traffic is generated for different settings of the individual modules consecutively and/or in parallel. Accordingly, the central control module may control the individual modules such that different combinations of human behavior data, use cases of applications, electronic devices and/or types of network connections are used simultaneously and/or consecutively in order to generate the network data traffic, such that versatile network data traffic of high quality is provided.

Another aspect of the present invention provides that the network data traffic is labeled, particularly wherein the network data traffic is labeled based on settings of the individual modules. The network data traffic may be labeled by a human expert and/or automatically based on the settings of the individual modules. Accordingly, the labeled network data traffic may comprise information on the at least one use case of the at least one application, the type of the electronic device generating the network data traffic, and/or the type of connection of the at least one electronic device to the network. Thus, the training, re-training, and/or testing of the machine-learning module can be performed based on the labeled data.

As already mentioned above, the network data traffic may alternatively or additionally be labeled based on the metadata and/or the machine-learning features obtained by post-processing the network data traffic.

According to the invention, the problem further is solved by a training method for training a machine-learning module. The method comprises the following steps:
- generating network data traffic by means of the method described above;
- generating training data based on the network data traffic;
- feeding the machine-learning module with the training data, wherein the training data corresponds to input data of the machine-learning module;
- processing the training data by means of the machine-learning module, thereby obtaining at least one output parameter, particularly wherein the at least one output parameter is associated with a classification of the network data traffic; and
- adapting weighting factors of the machine-learning module based on the at least one output parameter.

Accordingly, the machine-learning module is trained or re-trained to perform a certain task on the network data traffic. Particularly, the machine-learning module is trained or re-trained to classify the network data traffic.

In fact, any suitable machine-learning technique may be used for training or re-training the machine-learning module. For example, supervised, semi-supervised, and/or unsupervised training techniques may be used.

Regarding the further advantages and properties of the training method, reference is made to the explanations given above with respect to the method of generating network data traffic, which also hold for the training method and vice versa.

According to the invention, the problem further is solved by a machine-learning module. The machine-learning module is trained by means of a training method described above.

For example, the machine-learning module may comprise an artificial neural network.

Regarding the further advantages and properties of the machine-learning module, reference is made to the explanations given above with respect to the method of generating network data traffic, which also hold for the machine-learning module and vice versa.

According to the invention, the problem further is solved by a system for generating network data traffic. The system is configured to perform the method of generating network data traffic described above and/or the training method described above.

Accordingly, the system comprises an application use case module that is configured to generate application use case data, wherein the application use case data is associated with at least one use case of at least one application running on at least one electronic device.

The system further comprises a human behavior module that is configured to generate human behavior data, wherein the human behavior data is configured to imitate human behavior when operating the at least one electronic device.

The system further comprises an application execution module that is configured to generate control data based on the application use case data and based on the human behavior data.

The system further comprises at least one electronic device that is configured to generate the network data traffic based on the control data.

The system may comprise a device manager module that is configured to select the at least one electronic device generating the network data traffic from a plurality of different electronic devices.

The system may comprise a network manager module that is configured to configure a network connection between the at least one electronic device and a data network.

The system may comprise a network capture module that is configured to capture the generated network data traffic.

The system may comprise a post-processing module that is configured to post-process the captured network data traffic, thereby obtaining metadata and/or machine-learning features associated with the captured network data traffic.

The system may comprise a central control module that is configured to control the individual modules.

Regarding the further advantages and properties of the system, reference is made to the explanations given above with respect to the method of generating network data traffic, which also hold for the system and vice versa.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows a first variant of a system for generating network data traffic according to the present invention; and
- Figure 2 shows a flow chart of a training method for training a machine-learning method according to the present invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

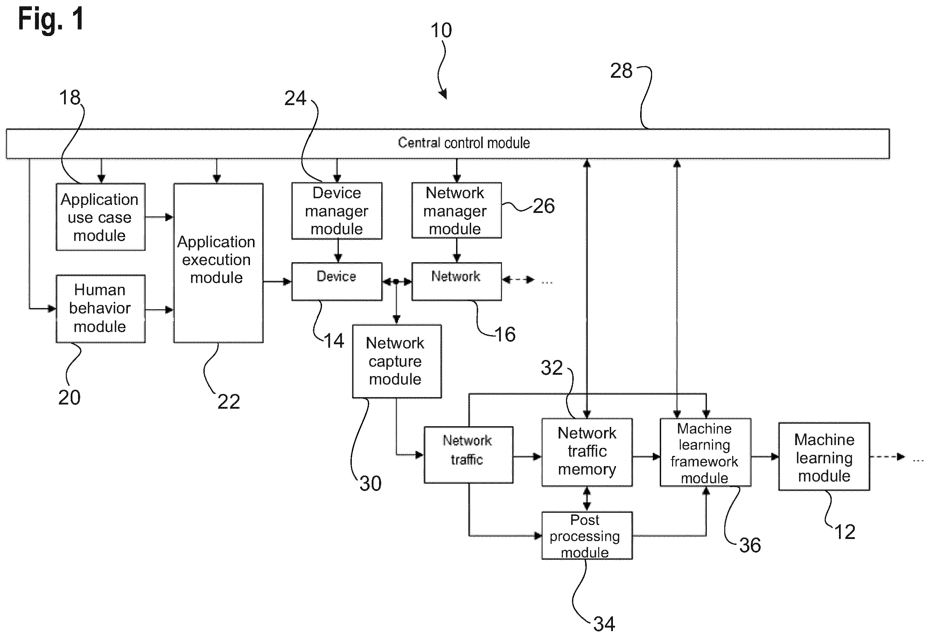

Figure 1 schematically shows a system 10 for generating network data traffic.

In general, the system 10 is configured to generate network data traffic, wherein the network data traffic may be used in order to train a machine-learning module 12, re-train a machine-learning module 12, and/or to test an already trained machine-learning module 12.

Therein and in the following, the term "module" is understood to describe suitable hardware, suitable software, or a combination of hardware and software that is configured to have a certain functionality.

The hardware may, inter alia, comprise a CPU, a GPU, an FPGA, an ASIC, or other types of electronic circuitry.

The system 10 comprises several modules that are configured to appropriately control at least one electronic device 14 to generate the network data traffic.

For example, the at least one electronic device 14 may comprise a personal computers, a MAC, a laptop, a smartphone, a tablet, a smart TV, a smart fridge, a console, a server, and/or a radio.

However, it is to be understood that any other type of electronic device 14 that is capable of generating network data traffic may be used.

The at least one electronic device 14 is connected to at least one data network 16, such that the network data traffic generated by means of the at least one electronic device 14 is transmitted via the at least one data network 16.

The system 10 comprises an application use case module 18 that is configured to generate application use case data, wherein the application use case data is associated with at least one use case of at least one application running on at least one electronic device 14.

Therein and in the following, the term "application" is understood to denote a computer program that is running on the at least one electronic device 14 or more precisely executed on a processing unit of the respective electronic device 14.

Moreover, the term "use case" is understood to denote a certain functionality of the respective application. As most applications have several different functionalities, the respective application may have several use cases.

The application use case module 18 selects from a plurality of different applications and/or from a plurality of different uses cases associated with the plurality of different applications in order to generate the application use case data.

In other words, the application use case module 18 selects the application(s) and the corresponding functionality or functionalities that are to be executed on the at least one electronic device 14.

The applications may relate to one or several operating systems, e.g. Windows, macOS, Linux, Android, iOS or any other operating system. Moreover, the application use case module 18 may select from one or several different versions of these operating systems. For example, the latest version of the respective operating system may be selected, such that up-to-date network data traffic is provided.

Moreover, the applications may relate to any software that is installed on the at least one electronic device 14, for example different browsers, messenger apps, virtual private network (VPN) clients, particularly VPN clients associated with different regions, file-sharing apps, e-mail apps, etc.

Particularly, the applications may employ any type of encryption when generating the network data traffic, such that encrypted network data traffic is provided.

The system 10 further comprises a human behavior module 20 that is configured to generate human behavior data, wherein the human behavior data is configured to imitate human behavior when operating the at least one electronic device 14.

The human behavior module 20 may imitate human behavior with respect to varying time between inputs, order of actions, and/or selection of actions. In other words, the human behavior module 20 may vary the frequency of inputs, the type of inputs, and/or the order of different types of inputs in order to simulate human behavior.

Particularly, the human behavior module 20 may comprise a machine-learning module that is trained to simulate or rather imitate human behavior.

The system 10 further comprises an application execution module 22 that is configured to generate control data based on the application use case data generated by the application use case module 18, and based on the human behavior data generated by the human behavior module 20.

In general, the control data comprises instructions for the at least one electronic device 14 to execute the at least one selected use case of the at least one selected application based on the inputs provided by the human behavior module 20.

The system 10 further comprises a device manager module 24 that is configured to select the at least one electronic device 14 executing the at least one use case of the at least one application, wherein the electronic device 14 may be selected from a plurality of different electronic devices 14.

Thus, the control data is forwarded to the at least one electronic device 14 selected by the device manager module 24.

The at least one electronic device 14 selected by the device manager module 24 executes the at least one use case of the at least one application based on the control data, thereby generating the network data traffic.

The system 10 further comprises a network manager module 26 that is adapted to configure at least one network connection between the at least one electronic device 14 and the at least one data network 16.

In other words, the network manager module 26 may select from several available connection types between the at least one electronic device 14 and the at least one data network 16.

Particularly, the at least one network connection may be established via LAN, WLAN, WAN, WWAN, and/or a mobile network.

Moreover, the network connection may be established based on one or more of several different mobile network standards, e.g. 3G, 4G, 5G, and/or CMW/CMX.

Thus, the network data traffic generated by the at least one electronic device 14 is transmitted to the at least one data network 16 by means of the at least one selected connection type.

The system 10 may comprise a central control module 28 that is configured to control the application use case module 18, the human behavior module 20, the application execution module 22, the device manager module 24, and/or the network manager module 26 to perform the respective functionality described above.

Therein, the central control module 28 ensures that the individual settings of the modules 18, 20, 22, 24, 26, 28 are compatible and reasonable.

Thus, the central control module 28 ensures that adequate combinations of human behavior data and selected use cases of selected applications are used in combination with a compatible electronic device or with compatible electronic devices.

Moreover, the central control module 28 may ensure that the selected connection type is compatible with the at least one electronic device 14 and/or the at least one data network 16.

The central control module 28 may control the individual modules 18, 20, 22, 24, 26 such that different combinations of human behavior data, use cases of applications, electronic devices 14 and/or types of network connections are used simultaneously and/or consecutively in order to generate the network data traffic, such that versatile network data traffic of high quality is provided.

The system 10 further comprises a network capture module 30 that is configured to capture the network data traffic generated by the at least one electronic device 14.

The captured network data traffic is saved into a network traffic memory 32.

Optionally, the system 10 may comprise a post-processing module 34 that is configured to post-process the captured network data traffic, thereby obtaining metadata and/or machine-learning features associated with the captured network data traffic.

For example, a deep packet inspection may be performed on the network data traffic in order to obtain the metadata and/or the machine-learning features.

The metadata and/or the machine-learning features obtained by the post-processing module may be saved in the network traffic memory 32.

The captured network data traffic, the metadata and the machine-learning features are forwarded to a machine-learning framework module 36.

In general, the machine-learning framework module 36 is configured to process the captured network data traffic, thereby obtaining training data that has a suitable input format for the machine-learning module 12.

Optionally, the machine-learning framework module 36 is configured to process the metadata and/or the machine-learning features in order to obtain the training data.

For example, the machine-learning framework module 36 may label the captured network data traffic based on user input, based on the settings of the individual modules 18, 20, 22, 24, 26, 28, based on the obtained metadata and/or based on the obtained machine-learning features, such that labeled training data is provided.

Thus, the network data traffic may be labeled by a human expert and/or automatically.

Optionally, the machine-learning framework module 36 may be configured to create the machine-learning module 12 based on the network data traffic.

In other words, the machine-learning framework module 36 may be configured to automatically establish a first iteration (i.e. an untrained version) of the machine-learning module 12 based on the network data traffic.

In general, the obtained training data is suitable for training the machine-learning module 12, re-training the machine-learning module 12, and/or testing the machine-learning module 12.

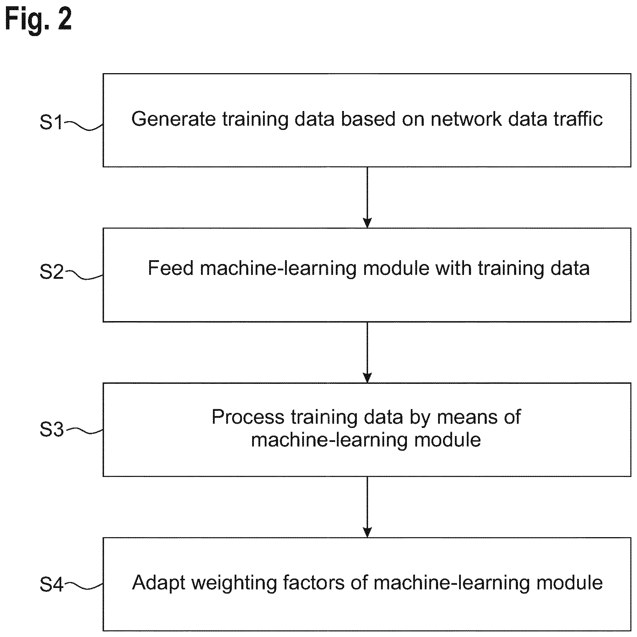

Figure 2 shows a flow chart of a training method for training or re-training the machine-learning module 12.

Training data is generated based on the generated network data traffic, as describe above (step S1).

The machine-learning module 12 is fed with the training data, wherein the training data corresponds to input data of the machine-learning module 12 (step S2).

The training data is processed by means of the machine-learning module 12, thereby generating at least one output parameter (step S3).

The at least one output parameter may be associated with a classification of the generated network data traffic.

Weighting factors of the machine-learning module are adapted based on the at least one output parameter (step S4).

Particularly, an error may be determined that corresponds to a deviation of the at least one output parameter determined by the machine-learning module 12 from at least one actual output parameter, i.e. from the true value of the at least one output parameter.

Thus, the weighting factors of the machine-learning module may be adapted such that the error is minimized or at least reduced.

Any suitable machine-learning technique may be used in order to adapt the weighting factors of the machine-learning module 12. For example, supervised, semi-supervised, and/or unsupervised training techniques may be used.

However, the training data obtained as described above is not only suitable for training and/or re-training the machine-learning module 12, but also for testing an already trained machine-learning module 12.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A method of generating network data traffic, the method comprising the following steps:
- generating application use case data by means of an application use case module (18), wherein the application use case data is associated with at least one use case of at least one application running on at least one electronic device (14);
- generating human behavior data by means of a human behavior module (20), wherein the human behavior data is configured to imitate human behavior when operating the at least one electronic device (14);
- generating control data based on the application use case data and based on the human behavior data by means of an application execution module (22);
- generating network data traffic based on the control data by means of the at least one electronic device (14); and
- capturing the generated network data traffic by means of a network capture module (30);
wherein the human behavior module (20) imitates human behavior with respect to varying time between inputs, order of actions, and/or selection of actions, wherein the human behavior module varies the frequency of inputs, the type of inputs, and/or the order of different types of inputs in order to simulate human behavior,
the method further comprising post-processing the captured data by means of a post-processing module (34), thereby obtaining machine-learning features associated with the captured network data traffic, for use as training data for training a machine-learning module.

2. The method according to claim 1, wherein the application use case module (18) selects from a plurality of different applications in order to generate the application use case data, particularly from a plurality of use cases associated with the respective applications.

3. The method according to any one of the preceding claims, wherein the at least one use case is predefined and/or obtained by means of a machine-learning technique.

4. The method according to any one of the preceding claims, wherein the at least one electronic device (14) generating the network data traffic is selected from a plurality of different electronic devices (14) by means of a device manager module (24).

5. The method according to any one of the preceding claims, wherein a network connection between the at least one electronic device (14) and a data network (16) is configured by means of a network manager module (26).

6. The method according to claim 5, wherein the network connection is established via LAN, WLAN, WAN, WWAN, and/or a mobile network.

7. The method according to any one of the preceding claims, wherein the captured data is post-processed by means of the post-processing module (34), thereby obtaining metadata associated with the captured network data traffic.

8. The method according to any one of the preceding claims, wherein the individual modules (18, 20, 22, 24, 26) are controlled by a central control module (28).

9. The method according to any one of the preceding claims, wherein the network data traffic is generated for different settings of the individual modules (18, 20, 22, 24, 26) consecutively and/or in parallel.

10. The method according to any one of the preceding claims, wherein the network data traffic is labeled, particularly wherein the network data traffic is labeled based on settings of the individual modules (18, 20, 22, 24, 26).

11. A training method for training a machine-learning module (12), the method comprising the following steps:
- generating network data traffic by means of a method according to any one of the preceding claims;
- generating training data based on the network data traffic;
- feeding the machine-learning module (12) with the training data, wherein the training data corresponds to input data of the machine-learning module (12);
- processing the training data by means of the machine-learning module (12), thereby obtaining at least one output parameter, particularly wherein the at least one output parameter is associated with a classification of the network data traffic; and
- adapting weighting factors of the machine-learning module (12) based on the at least one output parameter.

12. A machine-learning module, wherein the machine-learning module (12) is trained by means of a training method according to claim 11.

13. A system for generating network data traffic, wherein the system (10) is configured to perform the method according to any one of the claims 1 to 10 and/or the training method of claim 11.

## Patentansprüche

1. Verfahren zum Erzeugen von Netzwerkdatenverkehr, das Verfahren umfassend die folgenden Schritte:
- Erzeugen von Anwendungsverwendungsfalldaten mittels eines Anwendungsverwendungsfallmoduls (18), wobei die Anwendungsverwendungsfalldaten mindestens einem Verwendungsfall mindestens einer Anwendung zugeordnet sind, die auf mindestens einer elektronischen Vorrichtung (14) abläuft;
- Erzeugen von Daten von menschlichem Verhalten mittels eines Moduls (20) von menschlichem Verhalten, wobei die Daten von menschlichem Verhalten konfiguriert sind, um menschliches Verhalten bei einem Betreiben der mindestens einen elektronischen Vorrichtung (14) nachzuahmen;
- Erzeugen von Steuerdaten basierend auf den Anwendungsverwendungsfalldaten und basierend auf den Daten von menschlichem Verhalten mittels eines Anwendungsausführungsmoduls (22);
- Erzeugen von Netzwerkdatenverkehr basierend auf den Steuerdaten mittels der mindestens einen elektronischen Vorrichtung (14); und
- Erfassen des erzeugten Netzwerkdatenverkehrs mittels eines Netzwerkerfassungsmoduls (30);
wobei das Modul (20) von menschlichem Verhalten menschliches Verhalten in Bezug auf variierende Zeit zwischen Eingaben, Reihenfolge von Aktionen und/oder Auswahl von Aktionen nachahmt, wobei das Modul von menschlichem Verhalten die Frequenz von Eingaben, die Art von Eingaben und/oder die Reihenfolge verschiedener Arten von Eingaben variiert, um menschliches Verhalten zu simulieren,
das Verfahren ferner umfassend ein Nachverarbeiten der erfassten Daten mittels eines Nachverarbeitungsmoduls (34), wodurch Maschinenlernmerkmale erhalten werden, die dem erfassten Netzwerkdatenverkehr zugeordnet sind, zur Verwendung als Trainingsdaten zum Trainieren eines Maschinenlernmoduls.

2. Verfahren nach Anspruch 1, wobei das Anwendungsverwendungsfallmodul (18) aus einer Vielzahl verschiedener Anwendungen auswählt, um die Anwendungsverwendungsfalldaten zu erzeugen, insbesondere aus einer Vielzahl von Verwendungsfällen, die den jeweiligen Anwendungen zugeordnet sind.

3. Verfahren nach einem der vorstehenden Ansprüche, wobei der mindestens eine Verwendungsfall vordefiniert und/oder mittels einer Maschinenlerntechnik erhalten ist.

4. Verfahren nach einem der vorstehenden Ansprüche, wobei die mindestens eine elektronische Vorrichtung (14), die den Netzwerkdatenverkehr erzeugt, aus einer Vielzahl von verschiedenen elektronischen Vorrichtungen (14) mittels eines Vorrichtungsverwaltungsmoduls (24) ausgewählt ist.

5. Verfahren nach einem der vorstehenden Ansprüche, wobei eine Netzwerkverbindung zwischen der mindestens einen elektronischen Vorrichtung (14) und einem Datennetzwerk (16) mittels eines Vorrichtungsverwaltungsmoduls (26) konfiguriert ist.

6. Verfahren nach Anspruch 5, wobei die Netzwerkverbindung über LAN, WLAN, WAN, WWAN und/oder ein Mobilfunknetz hergestellt wird.

7. Verfahren nach einem der vorstehenden Ansprüche, wobei die erfassten Daten mittels des Nachverarbeitungsmoduls (34) nachverarbeitet werden, wodurch Metadaten erhalten werden, die dem erfassten Netzwerkdatenverkehr zugeordnet sind.

8. Verfahren nach einem der vorstehenden Ansprüche, wobei die einzelnen Module (18, 20, 22, 24, 26) durch ein zentrales Steuermodul (28) gesteuert werden.

9. Verfahren nach einem der vorstehenden Ansprüche, wobei der Netzwerkdatenverkehr für verschiedene Einstellungen der einzelnen Module (18, 20, 22, 24, 26) aufeinanderfolgend und/oder parallel erzeugt wird.

10. Verfahren nach einem der vorstehenden Ansprüche, wobei der Netzwerkdatenverkehr gekennzeichnet ist, insbesondere wobei der Netzwerkdatenverkehr basierend auf Einstellungen der einzelnen Module (18, 20, 22, 24, 26) gekennzeichnet ist.

11. Trainingsverfahren zum Trainieren eines Maschinenlernmoduls (12), das Verfahren umfassend die folgenden Schritte:
- Erzeugen von Netzwerkdatenverkehr mittels eines Verfahrens nach einem der vorstehenden Ansprüche;
- Erzeugen von Trainingsdaten basierend auf dem Netzwerkdatenverkehr;
- Zuführen der Trainingsdaten zu dem Maschinenlernmodul (12), wobei die Trainingsdaten Eingabedaten des Maschinenlernmoduls (12) entsprechen;
- Verarbeiten der Trainingsdaten mittels des Maschinenlernmoduls (12), wodurch mindestens ein Ausgabeparameter erhalten wird, insbesondere wobei der mindestens eine Ausgabeparameter einer Klassifizierung des Netzwerkdatenverkehrs zugeordnet ist; und
- Anpassen von Gewichtungsfaktoren des Maschinenlernmoduls (12) basierend auf dem mindestens einen Ausgabeparameter.

12. Maschinenlernmodul, wobei das Maschinenlernmodul (12) mittels eines Trainingsverfahrens nach Anspruch 11 trainiert wird.

13. System zum Erzeugen von Netzwerkdatenverkehr, wobei das System (10) konfiguriert ist, um das Verfahren nach einem der Ansprüche 1 bis 10 und/oder das Trainingsverfahren von Anspruch 11 durchzuführen.

## Revendications

1. Procédé de génération d'un trafic de données de réseau, le procédé comprenant les étapes suivantes :
- la génération de données de cas d'utilisation d'application au moyen d'un module de cas d'utilisation d'application (18), dans lequel les données de cas d'utilisation d'application sont associées à au moins un cas d'utilisation d'au moins une application s'exécutant sur au moins un dispositif électronique (14) ;
- la génération de données de comportement humain au moyen d'un module de comportement humain (20), dans lequel les données de comportement humain sont configurées pour imiter un comportement humain lors du fonctionnement de l'au moins un dispositif électronique (14) ;
- la génération de données de commande sur la base des données de cas d'utilisation d'application et sur la base des données de comportement humain au moyen d'un module d'exécution d'application (22) ;
- la génération d'un trafic de données de réseau sur la base des données de commande au moyen de l'au moins un dispositif électronique (14) ; et
- la capture du trafic de données de réseau généré au moyen d'un module de capture de réseau (30) ;
dans lequel le module de comportement humain (20) imite un comportement humain en ce qui concerne une variation de temps entre des entrées, un ordre d'actions et/ou une sélection d'actions, dans lequel le module de comportement humain fait varier la fréquence des entrées, du type d'entrées et/ou de l'ordre de différents types d'entrées afin de simuler un comportement humain,
le procédé comprenant en outre un post-traitement des données capturées au moyen d'un module de post-traitement (34), obtenant ainsi des caractéristiques d'apprentissage automatique associées au trafic de données de réseau capturé, en vue de leur utilisation en tant que données d'entraînement pour entraîner un module d'apprentissage automatique.

2. Procédé selon la revendication 1, dans lequel le module de cas d'utilisation d'application (18) sélectionne à partir d'une pluralité de différentes applications afin de générer les données de cas d'utilisation d'application, en particulier à partir d'une pluralité de cas d'utilisation associés aux applications respectives.

3. Procédé selon l'une quelconque des revendications précédentes, dans lequel l'au moins un cas d'utilisation est prédéfini et/ou obtenu au moyen d'une technique d'apprentissage automatique.

4. Procédé selon l'une quelconque des revendications précédentes, dans lequel l'au moins un dispositif électronique (14) générant le trafic de données de réseau est sélectionné à partir d'une pluralité de dispositifs électroniques (14) différents au moyen d'un module gestionnaire de dispositif (24).

5. Procédé selon l'une quelconque des revendications précédentes, dans lequel une connexion réseau entre l'au moins un dispositif électronique (14) et un réseau de données (16) est configurée au moyen d'un module gestionnaire de réseau (26).

6. Procédé selon la revendication 5, dans lequel la connexion réseau est établie par l'intermédiaire d'un LAN, d'un WLAN, d'un WAN, d'un WWAN et/ou d'un réseau mobile.

7. Procédé selon l'une quelconque des revendications précédentes, dans lequel les données capturées font l'objet d'un post-traitement au moyen du module de post-traitement (34), obtenant ainsi des métadonnées associées au trafic de données de réseau capturé.

8. Procédé selon l'une quelconque des revendications précédentes, dans lequel les modules individuels (18, 20, 22, 24, 26) sont commandés par un module de commande central (28).

9. Procédé selon l'une quelconque des revendications précédentes, dans lequel le trafic de données de réseau est généré pour différents réglages des modules individuels (18, 20, 22, 24, 26) consécutivement et/ou en parallèle.

10. Procédé selon l'une quelconque des revendications précédentes, dans lequel le trafic de données de réseau est étiqueté, en particulier dans lequel le trafic de données de réseau est étiqueté sur la base de réglages des modules individuels (18, 20, 22, 24, 26).

11. Procédé d'entraînement permettant d'entraîner un module d'apprentissage automatique (12), le procédé comprenant les étapes suivantes :
- la génération d'un trafic de données de réseau au moyen d'un procédé selon l'une quelconque des revendications précédentes ;
- la génération de données d'entraînement sur la base du trafic de données de réseau ;
- l'alimentation du module d'apprentissage automatique (12) avec les données d'entraînement, dans lequel les données d'entraînement correspondent aux données d'entrée du module d'apprentissage automatique (12) ;
- le traitement des données d'entraînement au moyen du module d'apprentissage automatique (12), obtenant ainsi au moins un paramètre de sortie, en particulier dans lequel l'au moins un paramètre de sortie est associé à une classification du trafic de données de réseau ; et
- l'adaptation de facteurs de pondération du module d'apprentissage automatique (12) en fonction de l'au moins un paramètre de sortie.

12. Module d'apprentissage automatique, dans lequel le module d'apprentissage automatique (12) est entraîné au moyen d'un procédé d'entraînement selon la revendication 11.

13. Système permettant de générer un trafic de données de réseau, dans lequel le système (10) est configuré pour réaliser le procédé selon l'une quelconque des revendications 1 à 10 et/ou le procédé d'entraînement selon la revendication 11.
